# EUROPEAN PATENT APPLICATION

(11) **EP 4 261 438 A1**
(43) Date of publication of application: **18.10.2023**
(21) Application number: 22168007.7
(22) Date of filing: 12.04.2022
(51) Int. Cl.: F16H 63/16, F16H 63/34, F16H 63/18

(54) **ACTUATION SYSTEM FOR THE ACTUATION OF MOVEMENT ELEMENTS OF A GEARBOX AND ARRANGEMENT FOR A GEARBOX COMPRISING THE ACTUATION SYSTEM**

(71) Applicant: Valeo eAutomotive Germany GmbH, 91056 Erlangen (DE)
(72) Inventor: Kolbe, Stephan, 91056 Erlangen (DE); Kühlkamp, Karsten, 91056 Erlangen (DE)
(74) Representative: Valeo Powertrain Systems

(57) **Abstract**

Actuation system (1), in particular for the actuation of movement elements of a gearbox, comprising: an actuator (4), a spindle (3) which can be driven by the actuator (4), a threaded tube (5) engaged with the spindle (3), wherein the threaded tube (5) is movable axially along the spindle (3), wherein the threaded tube (5) can be connected with one movement element at a time, either with a shift fork (8) or a park element,
whereby, when the threaded tube (5) is connected with the shift fork (8), it can be moved between a first position, in which the threaded tube (5) closes a first shift element of a gearbox, a neutral position in which all shift elements are opened and no gearbox power transfer is possible, a third position, in which the threaded tube (5) closes a second shift element of the gearbox, and, when the threaded tube (5) is connected with the park element, it can be moved to a fourth position enabling actuation of the park element.

## Description

The invention relates to an actuation system, in particular for the actuation of movement elements of a gearbox.

In a gearbox for an electric vehicle or a hybrid vehicle the actuation of a shift element is usually done by moving a clutch element part axially or radially. Basically, there are two main methods for the actuation of this movement. A hydraulic system allows the actuation of multiple movement elements, however, hydraulic systems are expensive, because several components are needed like a high-pressure pump, a hydraulic control unit, oil channels, filters and a pressure accumulator. In addition, a hydraulic system has increased cleanliness requirements.

As an alternative, the actuation of a single movement element can be done electromechanically. Electro-mechanical actuation of a single movement element is cheaper compared to the hydraulic system. However, it enables only one linear or rotatory movement, which means that one actuator and one movement mechanism like a lever or a spindle can change the shift status of only one movement element. In this way it is e. g. possible to either shift a gear or to actuate a park mechanism. In case when a gearbox comprises two or more movement elements, including a park mechanism, usually a complicated and expensive hydraulic system or at least two electro-mechanical actuators including two separate movement mechanisms are required. Hence, adding shift functionality to a gearbox substantially increases costs, the number of parts and the size and weight of the gearbox.

The object of the invention is to provide an actuating system for a gearbox with two or more movement elements having a simpler structure.

This object is achieved by an actuation system with the features of claim 1.

According to the invention an actuation system, in particular for the actuation of movement elements of a gearbox, is provided, comprising: an actuator, a spindle which can be driven by the actuator, a threaded tube engaged with the spindle, wherein the threaded tube is movable axially along the spindle, wherein the threaded tube can be connected with one movement element at a time, either with a shift fork or a park element, whereby, when the threaded tube is connected with the shift fork, it can be moved between a first position, in which the threaded tube closes a first shift element of a gearbox, a neutral position in which all shift elements are opened and no gearbox power transfer is possible, a third position, in which the threaded tube closes a second shift element of the gearbox, and, when the threaded tube is connected with the park element, it can be moved to a fourth position enabling actuation of the park element.

The invention is based on the idea that a single electro-mechanical actuator can be used to shift at least two movement elements, like a shift fork or a park element. The inventive actuation system comprises a spindle having a threaded tube mounted to it with a thread. When the spindle is rotated by the actuator the threaded tube is moved axially along the longitudinal axis of the spindle between different positions. Each translatory position of the threaded tube is assigned to a specific rotatory position α. In a first translatory position or range the threaded tube is coupled with a first movement element of a gearbox, e.g. a shift fork. The threaded tube can only be coupled to a maximum of one movement element at the same time. By rotating the threaded tube, it can be decoupled and no shifting operation is possible. By a further translatory movement the threaded tube can be moved to a second position, in which it is coupled with a second movement element of a gearbox, like a park element or a park cone.

The invention has several advantages. The inventive actuation system comprises only a small number of parts, leading to reduced costs, weight and a reduced size. A complicated hydraulic system is not necessary. Apart from other conventional actuators for a gearbox the inventive actuator has more shift functionalities including actuation of a park element, a park cone or a park lock.

It is particularly preferred that the threaded tube of the inventive actuation system comprises a guiding groove on its outer surface and a pin or a room-position-fixated rotatable ball element is arranged at a support structure and engaged in the guiding groove of the threaded tube, wherein, when the threaded tube is moved axially, the threaded tube is turned around its longitudinal axis, connecting or disconnecting the threaded tube with or from one of the movement elements. It is also possible that several room-position-fixated rotatable ball elements are present, which can be fixed in a rotatable manner at a support structure like a wall of a housing. Such rotatable ball elements reduce friction between itself and the threaded tube.

The pin, which is fixated at a support structure, for example a housing, defines a rotational angle (α) of the threaded tube. The groove has a certain shape which initiates a rotational movement of the threaded tube, because the pin is engaged with the groove. When the threaded tube is rotated, it can connect or disconnect with or from a movement element, either a shift fork or a park element, a park cone, a park roller or a piston.

According to a preferred embodiment a movement element is a shift fork. A shift fork is used to open or close a shift element of a gearbox by moving a sliding sleeve axially, in order to connect or disconnect a loose gearwheel with an inner shaft. According to another preferred embodiment a movement element is a park element or a park cone. A park cone is used to move a park pawl in a radial direction, so that a park wheel of a gearbox can be blocked. When the park wheel is in the blocked position, a movement of the vehicle is disabled.

According to a further development of the inventive actuation system the threaded tube is provided with two connecting interfaces, which are provided at opposite sides. Accordingly, the threaded tube can be moved in longitudinal direction of the spindle and it can selectively be connected to the first movement element or the second movement element. When the threaded tube is positioned in the middle, it is not connected to either the first movement element or the second movement element.

It is preferred that a connecting interface is a bayonet lock, a clip, a pin in an undercut, a magnet, a one-way clutch or a dog clutch or a pretension element like a spring loaded ball in a groove or in an undercut. In general, the coupling element can be any kind of a mechanical connection which connects the threaded tube with the first or the second movement element.

The movement element can be supported on the threaded tube by a slide bearing, which enables an axial movement of the movement element when it is engaged with the threaded tube.

The invention is further related to an arrangement for a gearbox, comprising an inventive actuation system, a first movement element which is formed as a shift fork, which can selectively actuate a clutch for a first gear wheel or a clutch for a second gear wheel, and a second movement element which is formed as a park element or a park cone, which can move or rotate a park pawl into a locked position, or which is formed as a park roller, a lever or a camshaft. The inventive arrangement enables four different shift states and is able to shift two gears, to disconnect the drive train and to actuate one park pawl with a single actuator. The arrangement enables a reduction of costs and the number of parts, plus has a small size and a reduced weight compared to conventional solutions.

According to a further development the arrangement comprises a park wheel, which can be locked by the park pawl. The park wheel can be arranged either on the input shaft of the gearbox or on an intermediate shaft of the gearbox. As an alternative, the park wheel can also be arranged on a gear wheel of the gearbox.

The first shift element of the inventive arrangement can be positioned on an intermediate shaft or axis and the second movement element can be arranged on the input shaft or axis of the gearbox or vice versa. It is also possible to position both shift elements on the same axis.

Exemplary embodiments of the invention will be explained in greater detail hereinafter with reference to the drawings, which show:
- Fig. 1: a sectional view of a first embodiment of an inventive actuation system, whereby the actuator axis is in the second gear position;
- Fig. 2: the actuation system shown in Fig. 1 in the first gear position;
- Fig. 3: the actuation system shown in Fig. 1 in the parking position;
- Fig. 4: a plane projection of the outer surface of actuator axis parts visualizing the position of the threaded tube with regard to a pin in the parking position;
- Fig. 5: a similar view as Fig. 4 when the threaded tube is in the first gear position;
- Fig. 6: a similar view as Fig. 4 when the threaded tube is in the neutral position;
- Fig. 7: a similar view as Fig. 4 when the threaded tube is in the second gear position;
- Fig. 8: a schematic view of a first inventive arrangement for a gearbox;
- Fig. 9: a second embodiment of an arrangement for a gearbox;
- Fig. 10: a third embodiment of an arrangement for a gearbox;
- Fig. 11: a fourth embodiment of an arrangement for a gearbox;
- Fig. 12: an exemplary position of the axes of a fifth arrangement for a gearbox;
- Fig. 13: a sectional view of the arrangement shown in Fig. 12 in the parking position;
- Fig. 14: a sectional view of the arrangement shown in Fig. 12 in the first gear position;
- Fig. 15: a sectional view of the arrangement shown in Fig. 12 in the neutral position;
- Fig. 16: a sectional view of the arrangement shown in Fig. 12 in the second gear position;
- Fig. 17: a sectional view of a sixth embodiment of the arrangement shown in Fig. 12 in the parking position;
- Fig. 18: a sectional view of the sixth embodiment of the arrangement shown in Fig. 12 in the first gear position;
- Fig. 19: a sectional view of the sixth embodiment of the arrangement shown in Fig. 12 in the neutral position; and
- Fig. 20: a sectional view of the sixth embodiment of the arrangement shown in Fig. 12 in the second gear position.

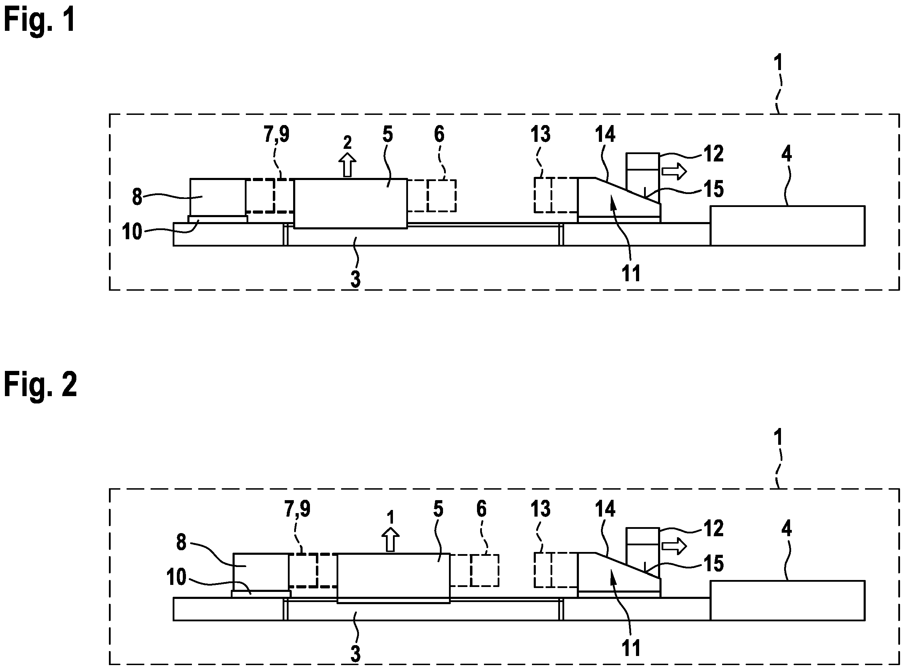

Fig. 1 is a sectional view of the upper half of an actuation system 1. The actuation system 1 comprises an actuator 4 with a spindle 3 which is guiding a threaded tube 5. The spindle 3 is provided with a thread at its outer surface. The actuator 4 formed as an electric motor is used for rotating the spindle 3. A threaded tube 5 having a thread at its inner surface is engaged with the spindle 3. When the spindle 3 is rotated, the threaded tube 5 is moved axially along the spindle 3.

In Fig. 1 it is visible that the threaded tube 5 is provided with connecting interfaces at its opposite sides. In this embodiment the connecting interfaces are formed as bayonet locks 6, 7.

Fig. 1 shows the threaded tube 5 in a position when it is coupled with a shift fork 8. The shift fork 8 is also provided with a connecting interface in the form of a bayonet lock 9, which can be connected with the bayonet lock 7 of the threaded tube 5. The shift fork 8 is supported on the spindle 3 by a slide bearing 10, so that it can be moved along the axial direction. In the position shown in Fig. 1 a second gear of a gearbox (not shown) is engaged, as is indicated by the "2" above the threaded tube 5.

Fig. 2 shows the actuation system 1 when the threaded tube 5 has been moved axially from the position shown in Fig. 1 by rotating the spindle 3. Due to the connection between the threaded tube 5 and the shift fork 8 the threaded tube 5 moves the shift fork 8 axially, in the illustration of Fig. 2 to the right-hand side. When the shift fork 8 is in this position, a first gear of a gearbox is engaged, as is indicated by the "1" above the threaded tube 5. A neutral position, indicated by an "N", is passed when the threaded tube 5 moves from the second gear position to the first gear position, indicated by an "1".

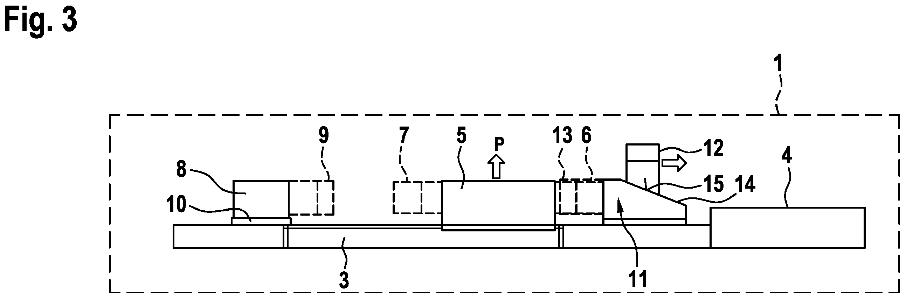

When the spindle 3 is further rotated, the threaded tube 5 is axially moved to the position shown in Fig. 3. Upon leaving the first gear position the bayonet lock 7 of the threaded tube 5 and the bayonet lock 9 of the shift fork 8 disconnect due to a rotation of the threaded tube 5, which will be explained later.

A park element comprises a park cone 11, which co-operates with a park pawl 12. Park cone 11 and park pawl 12 are positioned at the right side of the spindle 3. The park cone 11 comprises a bayonet lock 13, which may be identical to the bayonet lock 9 of the shift fork 8. The park cone 11 has a cone-shaped surface 14, which interacts with a counter surface 15 of the park pawl 12, which is shaped in the opposite direction, so that both surfaces 14, 15 can slide on each other.

In Fig. 1 and 2 the park cone 11 is not pushing the park pawl 12 into a park wheel 34. When the threaded tube 5 is moved by a rotation of the spindle 3 from the position shown in Fig. 2 to the position shown in Fig. 3, the bayonet lock 6 of the threaded tube 5 couples with the bayonet lock 13 of the park cone 11 due to a rotational movement of the threaded tube 5. In this coupled state the park cone 11 can be moved axially, so that the park pawl 12 slides on the cone-shaped surface 14, whereby the park pawl 12 is moved radially to the outer side. In this position the park pawl 12 engages a park wheel (not shown), so that a movement of a vehicle comprising the gearbox is blocked. This parking position is indicated by a "P".

As mentioned before, the threaded tube 5 is rotated for connecting and disconnecting with the shift fork 8 and the park cone 14. At its outer side the threaded tube 5 comprises a guiding groove 16 which is guiding a pin that is fixated at a support structure.

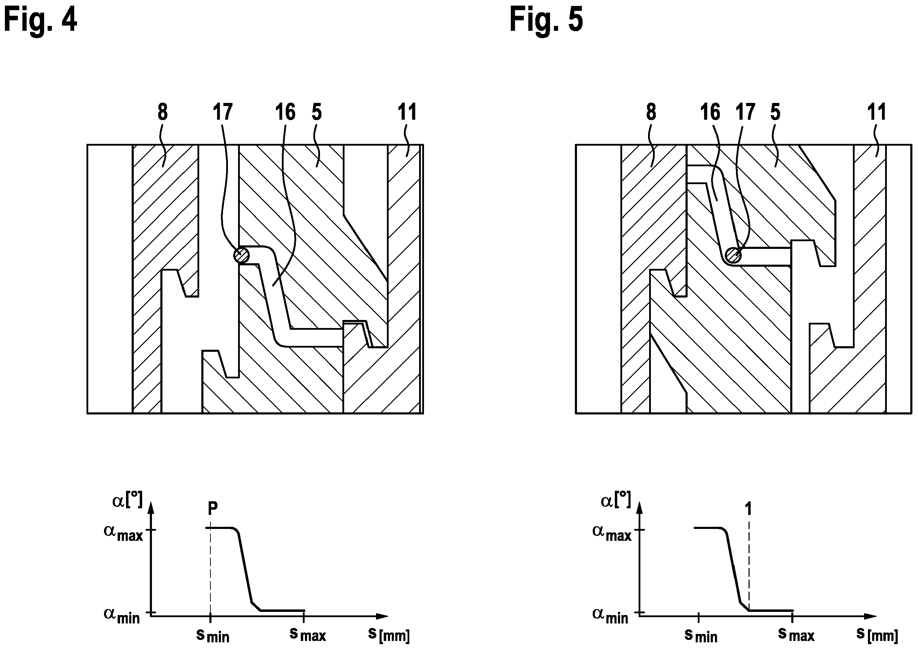

The upper part of Fig. 4 shows a circumferential view to visualize an exemplary shape and position of the guiding groove 16 at the outer surface of the threaded tube 5, the shift fork 8 and the park cone 11. Fig. 4 corresponds with the position of Fig. 3, when the threaded tube 5 is connected to the park cone 11. In this position the pin 17, which is fixated at the support structure, is at the left side of the threaded tube 5. When the threaded tube 5 is moved by a rotation of the spindle 3, in the view of Fig. 4 to the left side, the threaded tube 5 is rotated due to the shape of the guiding groove 16. The lower part of Fig. 4 shows the rotation angle α of the threaded tube 5 over the longitudinal axis position (s).

Fig. 5 shows the position of the threaded tube 5 when it has reached the first gear position "1". The pin 17 has passed the curved part of the guiding groove 16. The threaded tube 5 is connected to the shift fork 8. In the lower part of Fig. 5 one can see that the rotation angle α is substantially lower compared to the parking position shown in Fig. 4.

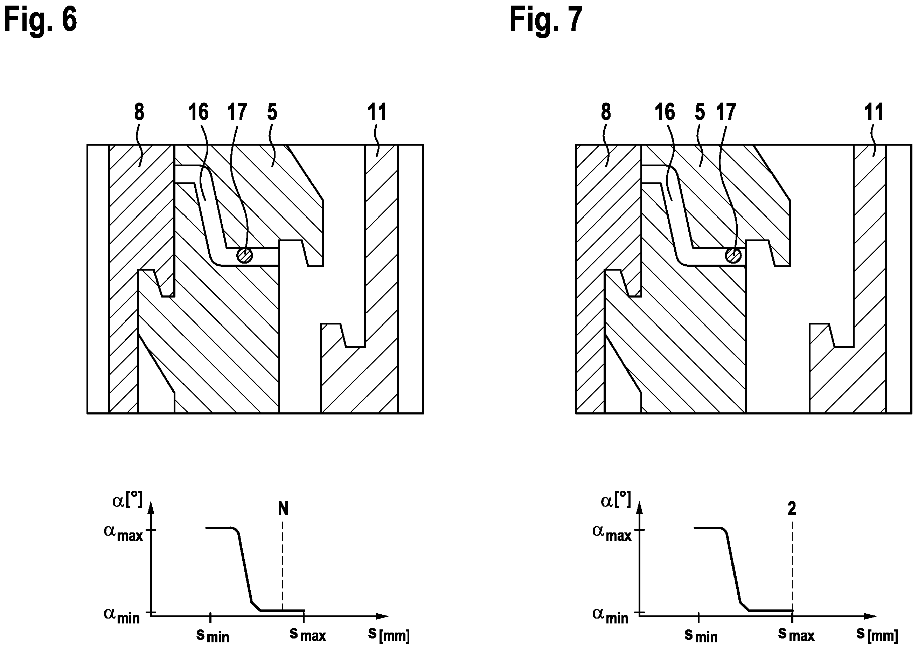

Fig. 6 shows the position of the threaded tube 5 when it has reached the neutral position "N". In this position the pin 17 is in a portion of the guiding groove 16 which is parallel to the axial direction. The threaded tube 5 is still connected with the shift fork 8, but the shift fork 8 is opening all clutches resulting in no torque transmission of the gearbox.

Fig. 7 shows the position of the threaded tube 5 when it has reached the second gear position "2". The pin 17 is now at the opposite end of the guiding groove 16 compared to the parking position shown in Fig. 4. Between the neutral position shown in Fig. 6 and the second gear position shown in Fig. 7 the threaded tube 5 has not been turned, it has only been moved axially.

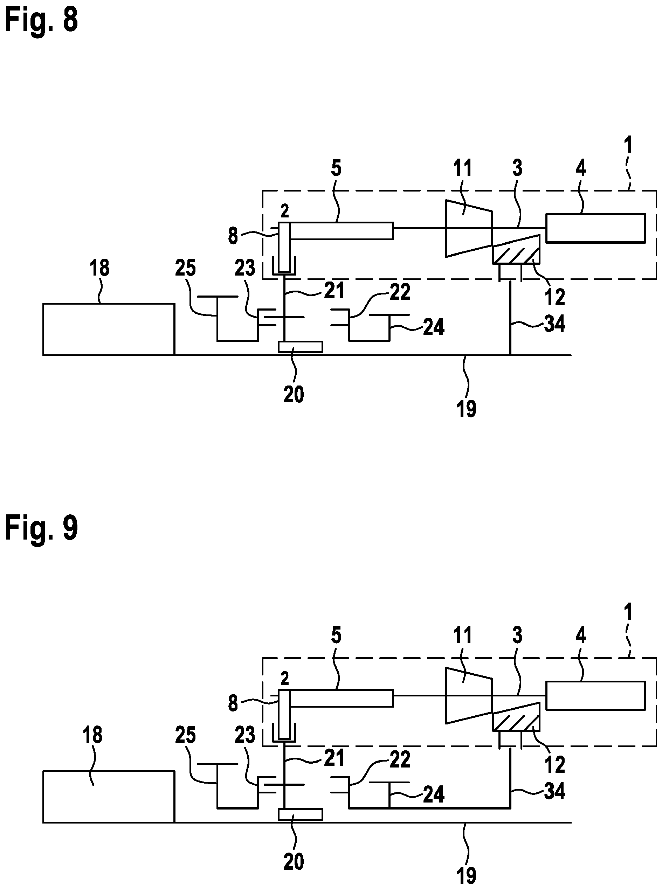

Fig. 8 is a schematic view of the upper half of an arrangement for a gearbox. The structure of the gearbox comprises the actuation system 1, the actuator 4, a park cone 11 and a park pawl 12. The threaded tube 5 is connected to the shift fork 8.

A drive unit 18, in this embodiment an electric motor, is connected to an input shaft 19 of a gearbox. Through a spline 20 the input shaft 19 is connected with a gear shift sleeve 21 which can be moved axially by the shift fork 8. Fig. 8 shows a position, in which the gear shift sleeve 21 is engaged with a clutch 23 of a second gear wheel 25 as indicated by the "2" above the shift fork 8. Through a movement of the shift fork 8 the gear shift sleeve 21 can be moved axially so that it decouples from the clutch 23 and couples with a clutch 22 of a first gear wheel 24. Accordingly, the actuation system 1 can shift between a first gear and a second gear. When the threaded tube 5 moves the park cone 11 to the park pawl 12 a park wheel 34 is blocked, so that a rotational movement of the input shaft 19 is prevented. Altogether, the actuation system 1 has four shift states, as it can selectively shift a first gear, a neutral position, a second gear and a park position.

Fig. 9 is a similar view as Fig. 8, therefore identical components will not be explained in detail again. In accordance with the arrangement of Fig. 8 the clutches 22, 23 are arranged on the input shaft 19 of the gearbox. Unlike the previous example the park wheel 34 is connected with the first gear wheel 24. The function of the arrangement shown in Fig. 9 is basically the same as of the arrangement shown in Fig. 8.

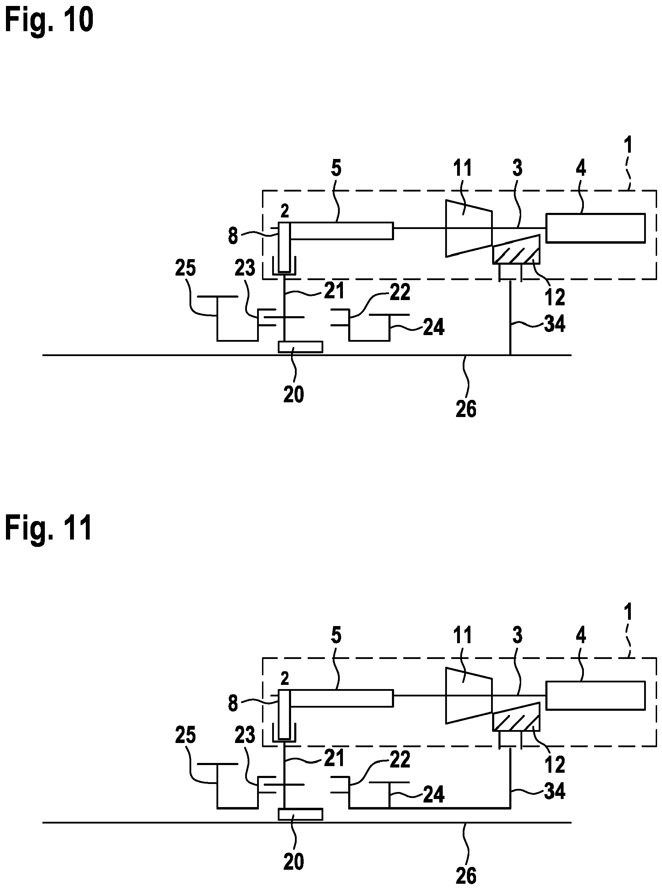

Fig. 10 shows an arrangement where the clutches 22, 23 are positioned on an intermediate shaft 26 of the gearbox. The park wheel 34 is connected to the intermediate shaft 26.

Fig. 11 shows a similar arrangement as Fig. 10, where the clutches 22, 23 are positioned on an intermediate shaft 26 of the gearbox, whereas the park wheel 34 is connected to the first gear wheel 24.

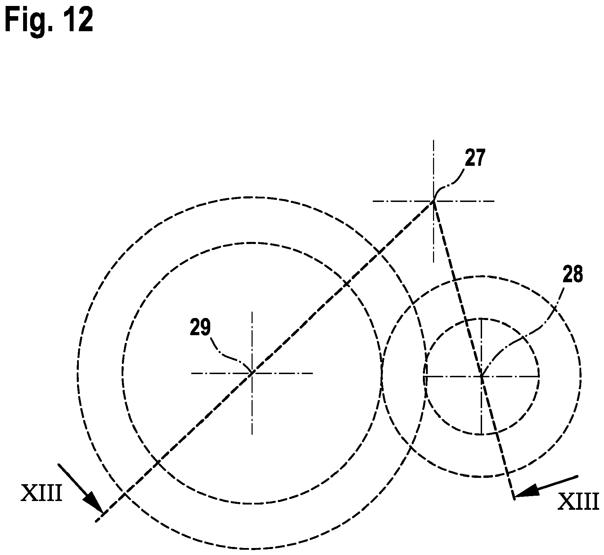

Fig. 12 shows the position of an actuator axis 27, an input axis 28 and an intermediate axis 29 of another arrangement for a gearbox.

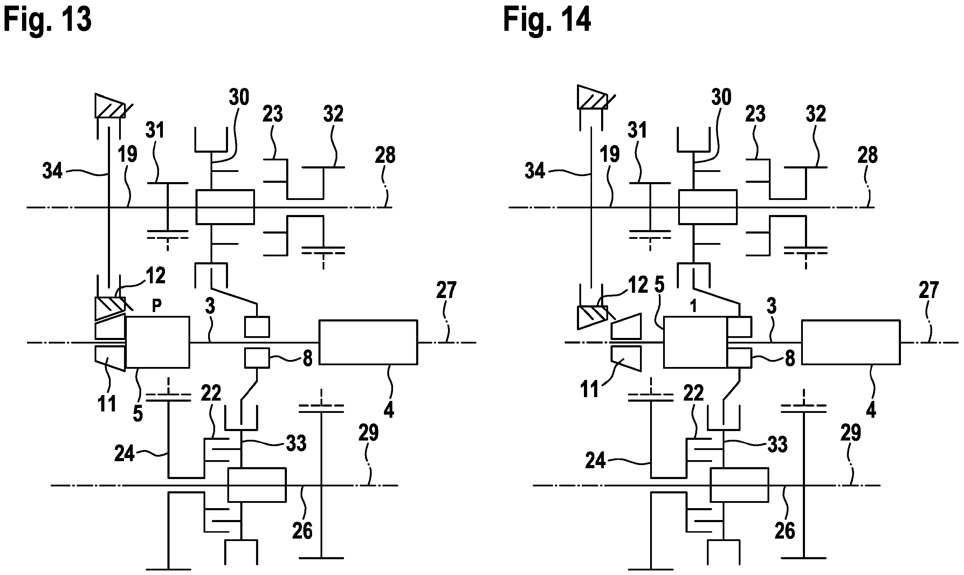

Fig. 13 is a sectional view corresponding to Fig. 12 along the line XIII-XIII of Fig. 12. Fig. 13 shows the arrangement in parking position, indicated by "P". In this state the park cone 11 has been moved by the threaded tube 5 on the actuator axis 27 to the park pawl 12, so that a park wheel 34 is blocked. On the input axis 28 a clutch 23 is positioned, so that a gear shift sleeve 30 can connect a second gear wheel 32 with the input shaft 19. On the intermediate axis 29 a clutch 22 is positioned, so that a gear shift sleeve 33 can connect the first gear wheel 24 with the intermediate shaft 26. In the parking position, as depicted in Fig. 13, the clutch 22 of the intermediate axis 29 is closed, the clutch 23 of the input axis 28 is open and the park pawl 12 is closed. Reference number 31 is a first gear wheel, which is part of the input shaft 19.

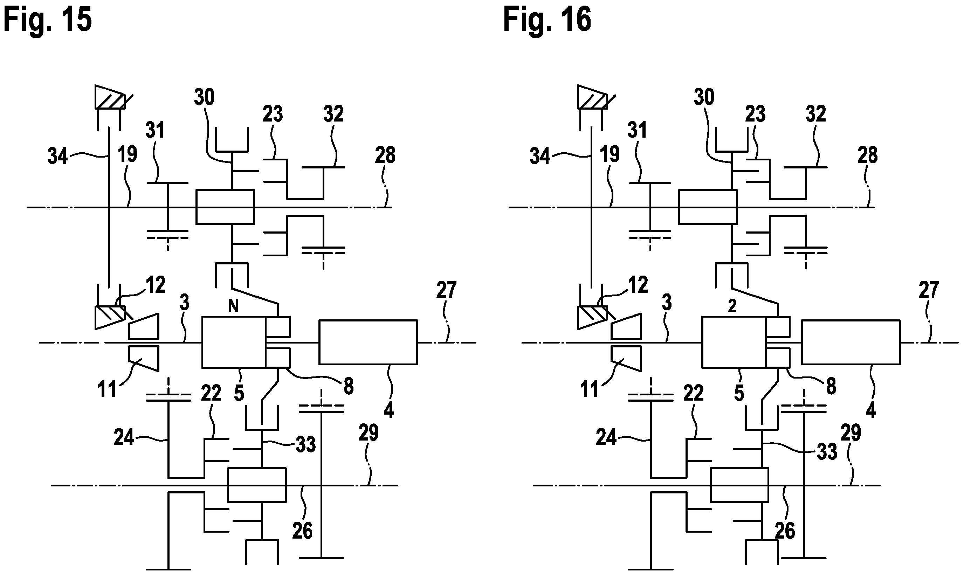

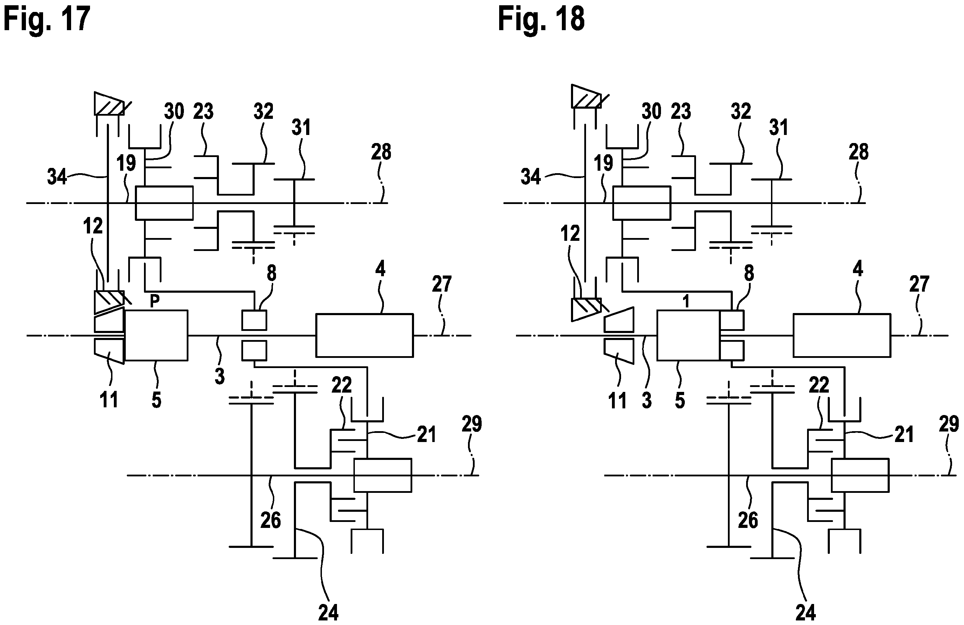

Fig. 14 shows the arrangement of Fig. 13 in the first gear position as indicated by the "1". The clutch 22 is closed, the clutch 23 is open and the park pawl 12 is open. Accordingly, the first gear wheel 24 is connected with the intermediate shaft 26. Fig. 15 shows the arrangement of Fig. 13 in the neutral position, as indicated by the "N". The clutch 22 is open, the clutch 23 is also open and the park pawl 12 is open. In this state, neither the input shaft 19 nor the intermediate shaft 26 is connected. Fig. 16 shows the arrangement of Fig. 13 in the second gear position, as indicated by the "2". The clutch 22 is open, the clutch 23 is closed and the park pawl 12 is open. Accordingly, the second gear wheel 32 is connected with the input shaft 19. Fig. 17 - 20 are sectional views of another arrangement having the axis positions as depicted in Fig. 12. Fig. 17 is a sectional view corresponding to Fig. 12 along the line XIII-XIII of Fig. 12. Fig. 17 shows the arrangement in parking position, as indicated by the "P". In accordance with the previous embodiment the clutch 22 is positioned on the intermediate axis 29 and the clutch 23 is positioned on the input axis 28. Unlike the last embodiment depicted in Fig. 13 - 16 the spur gears, namely the first gear wheel 31 and the second gear wheel 32, are arranged axially next to each other. In the parking position shown in Fig. 17 the clutch 22 on the intermediate axis 29 is closed, the clutch 23 on the input axis 28 is open and the park pawl 12 is closed.

Fig. 18 shows the arrangement of Fig. 17 in the first gear position, as indicated by the "1". The clutch 22 is closed, the clutch 23 is open, so that the first gear wheel 24 is connected with the intermediate shaft 26 and the park pawl 12 is open.

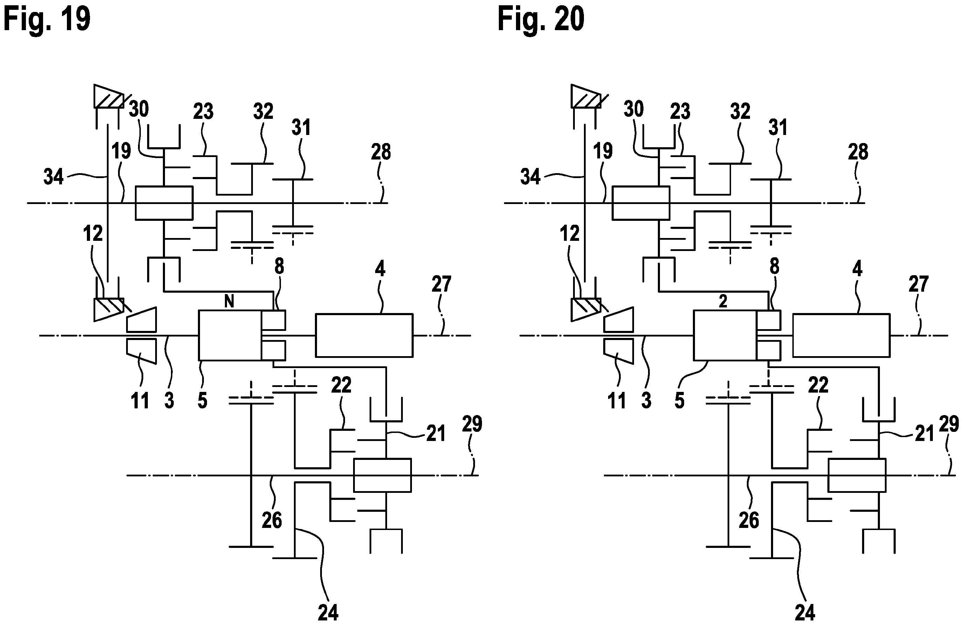

Fig. 19 shows the arrangement of Fig. 17 in the neutral position, as indicated by the "N". The clutch 22 is open, the clutch 23 is open as well. The park pawl 12 is open. In this state, neither the input shaft 19 nor the intermediate shaft 26 is able to transfer torque.

Fig. 20 shows the arrangement of Fig. 17 in the second gear position, as indicated by the "2". The clutch 22 is open, the clutch 23 is closed so that the second gear wheel 32 is connected with the input shaft 19.

### Reference numbers

- 1: actuation system
- 3: spindle
- 4: actuator
- 5: threaded tube
- 6: bayonet lock
- 7: bayonet lock
- 8: shift fork
- 9: bayonet lock
- 10: slide bearing
- 11: park cone
- 12: park pawl
- 13: bayonet lock
- 14: surface
- 15: counter surface
- 16: guiding groove
- 17: pin
- 18: drive unit
- 19: input shaft
- 20: spline
- 21: gear shift sleeve
- 22: clutch
- 23: clutch
- 24: first gear wheel
- 25: second gear wheel
- 26: intermediate shaft
- 27: actuator axis
- 28: input axis
- 29: intermediate axis
- 30: gear shift sleeve
- 31: first gear wheel
- 32: second gear wheel
- 33: gear shift sleeve
- 34: park wheel

## Claims

1. Actuation system (1), in particular for the actuation of movement elements of a gearbox, comprising:
- an actuator (4),
- a spindle (3) which can be driven by the actuator (4),
- a threaded tube (5) engaged with the spindle (3),
wherein the threaded tube (5) is movable axially along the spindle (3), wherein the threaded tube (5) can be connected with one movement element at a time, either with a shift fork (8) or a park element,
whereby, when the threaded tube (5) is connected with the shift fork (8), it can be moved between a first position, in which the threaded tube (5) closes a first shift element of a gearbox, a neutral position in which all shift elements are opened and no gearbox power transfer is possible, a third position, in which the threaded tube (5) closes a second shift element of the gearbox, and, when the threaded tube (5) is connected with the park element, it can be moved to a fourth position enabling actuation of the park element.

2. Actuation system according to claim 1, wherein the threaded tube (5) comprises a guiding groove (16) at its outer surface and a pin (17) or a room-position-fixated rotatable ball element is arranged at a support structure and engaged in the guiding groove (16) of the threaded tube (5), wherein, when the threaded tube (5) is moved axially, the threaded tube (5) is turned around its longitudinal axis, connecting or disconnecting the threaded tube (5) with or from one of the movement elements.

3. Actuation system according to claim 1 or 2, wherein a movement element is a shift fork (8), a park cone (11), a park element, a park roller, al lever or a piston.

4. Actuation system according to any of the preceding claims, wherein the threaded tube (5) is provided with two connecting interfaces, which are provided at opposite sides.

5. Actuation system according to claim 4, wherein a connecting interface is a bayonet lock (6, 7, 9, 13), a clip, a pin in an undercut, a magnet, a one-way clutch, a dog clutch or a pretension element like a spring loaded ball in a groove or in an undercut.

6. Actuation system according to any of the preceding claims, wherein a movement element is supported on the spindle (3) by a slide bearing (10), a ball spindle or directly with part to part contact.

7. Actuation system according to any of claims 2 to 6, wherein the shape of the guiding groove (16) is determined such that the threaded tube (5) follows a specific movement curve when it is driven by the spindle (3).

8. Actuation system according to any of the preceding claims, wherein a linear movement of the threaded tube (5) is effected by a combination of an electro-mechanical actuator (4) with the spindle (3) or an electro-mechanical linear actuator or a mechanical actuation.

9. Actuation system according to any of the preceding claims, wherein the park element comprises a spring element enabling damping during operation.

10. Arrangement for a gearbox, comprising:
- an actuation system (1) according to any one of claims 1 to 9,
- a first movement element which is formed as a shift fork (8) which can selectively actuate a clutch (22) for a first gear wheel (24) or a clutch (23) for a second gear wheel (25), and
- a second movement element which is formed as a park element or as a park roller, a lever or a camshaft, which can move a park pawl (12) into a locked position.

11. Arrangement according to claim 10, wherein a park wheel (34), which can be locked by the park pawl (12), is arranged either on the input shaft (19) of the gearbox or on an intermediate shaft (26) of the gearbox or on a gear wheel (24, 25) of the gearbox.

12. Arrangement according to claim 10 or 11, wherein the first shift element is arranged on an intermediate axis (29) and the second shift element is arranged on an input axis (28) of the gearbox.

13. Arrangement according to any of claims 10 to 12, wherein a shift element is a friction disc plate, a synchronizer, a dog clutch or a one way clutch.

14. Arrangement according to any of claims 10 to 13, wherein a drive unit (18) is connected to an input shaft (19) of the gearbox from the left or right side.
